# EUROPEAN PATENT APPLICATION

(11) **EP 4 687 040 A1**
(43) Date of publication of application: **04.02.2026**
(21) Application number: 24215643.8
(22) Date of filing: 27.11.2024
(51) Int. Cl.: G06F 11/3668, G06N 20/00, G06F 40/30

(54) **GENERATIVE AI APPLICATION ARTIFACT MANAGEMENT ENABLING SAFEGUARDING BY KEY USERS**

(30) Priority: 29.07.2024 US 202418787062
(71) Applicant: SAP SE, 69190 Walldorf (DE)
(72) Inventor: Eberlein, Peter, 69190 Walldorf (DE); Driesen, Volker, 69190 Walldorf (DE)
(74) Representative: Müller-Boré & Partner Patentanwälte PartG mbB

(57) **Abstract**

A computer-implemented method includes customizing artifacts of a large language model (LLM). A generative artificial intelligence (AI) (genAI) function of a software application that interfaces with the LLM and is instrumented for customer-side management is activated, as a genAI application. A verification test is activated to determine whether interactions between the LLM and genAI application generate expected results. Based on a result of the verification test, either adjusting the artifacts of the LLM or updating the genAI function of the software application. A new verification test is defined to determine whether interactions between the LLM and genAI application generate expected results. The new verification test is activated.

## Description

### BACKGROUND

In the quickly progressing domain of generative artificial intelligence (AI) and Large Language Models (LLMs), software applications (e.g., provided as a service or operative in private cloud computing environments) need additional capabilities for key users (i.e., specialists in software applications) to verify that AI enriched software applications operate according to specific needs. Verification includes being able to quickly customize instructions to LLMs if requirements are not met and to execute a switch to a superior LLM. Key users also need capabilities to adjust the scope of software applications which are using generative AI to a particular context (e.g., with respect to a particular entity or use), such as specific language expressed by an organizational or industry.

### SUMMARY

The present disclosure describes providing generative artificial intelligence (AI) (genAI) application artifact management which enables safeguarding by key users.

In an implementation, a computer-implemented method, comprising: customizing artifacts of a large language model (LLM); activating, as a genAI application, a genAI function of a software application that interfaces with the LLM and is instrumented for customer-side management; activating a verification test to determine whether interactions between the LLM and genAI application generate expected results; based on a result of the verification test, either adjusting the artifacts of the LLM or updating the genAI function of the software application; defining a new verification test to determine whether interactions between the LLM and genAI application generate expected results; and activating the new verification test.

The described subject matter can be implemented using a computer-implemented method; a non-transitory, computer-readable medium storing computer-readable instructions to perform the computer-implemented method; and a computer-implemented system comprising one or more computer memory devices interoperably coupled with one or more computers and having tangible, non-transitory, machine-readable media storing instructions that, when executed by the one or more computers, perform the computer-implemented method/the computer-readable instructions stored on the non-transitory, computer-readable medium.

The subject matter described in this specification can be implemented to realize one or more of the following advantages. First, the described approach permits safeguarding usage of generative artificial intelligence (AI) functionality in software applications. Key users (i.e., specialists in software applications) are provided capabilities to quickly react to required changes. Key user reactions will be quicker than a 3rd-party software application supplier (vendor) could react, and permit safeguarding AI functions in the software application for the users. Second, user feedback can be collected and evaluated. Key users can take this information into account in a self-service manner, without involving a vendor for every change (although key users will likely inform the vendor asynchronously, but not rely on the vendor to react quickly to required changes). Third, current AI Lifecycle Management (AI LM) functionality, which can be used to manage AI activation within a software application AI scenario, is enhanced. In AI scenarios, artifacts can be grouped (e.g., configuration, input parameters) and their versions replaced during a software application upgrade. AI LM permits activation / deactivation of AI scenarios, and versions of called Large Language Models (LLMs) can be managed. Compared to current AI LM functionality, the described approach adds functionality to customize LLM artifacts and test management. Fourth, testing scope is newly added, and tests can be provided by the vendor, optionally be adjusted, and can be activated at a user's system to continuously execute/monitor LLM responses. Fifth, new functionality of the describe approach includes key user development and adjustment of prompts, LLM configuration, verification tests, and an ability to run test-driven development using capability checks.

The details of one or more implementations of the subject matter of this specification are set forth in the Detailed Description, the Claims, and the accompanying drawings. Other features, aspects, and advantages of the subject matter will become apparent to those of ordinary skill in the art from the Detailed Description, the Claims, and the accompanying drawings.

### DESCRIPTION OF DRAWINGS

FIG 1 is a system diagram illustrating components of a system for providing generative artificial intelligence (AI) application artifact management which enables safeguarding by key users, according to an implementation of the present disclosure.
FIG. 2 is a flowchart illustrating an example of a computer-implemented method for <general description of the application>, according to an implementation of the present disclosure.
FIG. 3 is a block diagram illustrating an example of a computer-implemented system used to provide computational functionalities associated with described algorithms, methods, functions, processes, flows, and procedures, according to an implementation of the present disclosure.

Like reference numbers and designations in the various drawings indicate like elements.

### DETAILED DESCRIPTION

The following detailed description describes providing generative artificial intelligence (AI) (genAI) application artifact management which enables safeguarding by key users and is presented to enable any person skilled in the art to make and use the disclosed subject matter in the context of one or more particular implementations. Various modifications, alterations, and permutations of the disclosed implementations can be made and will be readily apparent to those of ordinary skill in the art, and the general principles defined can be applied to other implementations and applications, without departing from the scope of the present disclosure. In some instances, one or more technical details that are unnecessary to obtain an understanding of the described subject matter and that are within the skill of one of ordinary skill in the art may be omitted so as to not obscure one or more described implementations. The present disclosure is not intended to be limited to the described or illustrated implementations, but to be accorded the widest scope consistent with the described principles and features.

In the quickly progressing domain of genAI and Large Language Models (LLMs), software applications (e.g., provided as a service or operative in private cloud computing environments) need additional capabilities for key users (i.e., specialists in software applications) to verify that AI enriched software applications operate according to specific needs. Verification includes being able to quickly customize instructions to LLMs if requirements are not met and to execute a switch to a superior LLM. Key users also need capabilities to adjust the scope of software applications which are using genAI to a particular context (e.g., with respect to a particular entity or use), such as specific language (i.e., terms or "jargon") expressed by an organizational or industry.

The described approach permits management of artifacts used in AI software applications to control integration with LLMs, monitor response quality, and to perform regression tests of AI scenarios. Key users are permitted to adjust provided software applications to their own needs, validate consistency over time, and to merge their adjustments with future versions of software. The described approach also supports key users in developing custom AI enabled extensions following a test-driven development model.

Key users may wish to individualize and change aspects of artifacts of a software application related to LLMs. For example, a key user may want to modify a prompt (i.e., the instruction to a LLM as to what to do), a configuration (e.g., a LLM or LLM version to use) or a response to validation tests (e.g., verifying that output of a LLM is matching requirements).

As previously mentioned, innovation speed in the genAI domain is very fast, and new LLMs and LLM versions appear quickly (e.g., weekly or monthly). With new versions of LLMs, the earlier LLM versions are typically outperformed and software application developers wish to switch to the newer versions. Also, the software application vendors will often not support older LLM versions past a certain point in time.

In Software as a Service (SaaS) deployments, vendors can timely update a software application to use new LLM versions, but this action can disrupt existing software application scenarios. In private cloud deployments, when a lifecycle is controlled by the key user(s), a speed of change required by adjusting software applications to new LLM versions is typically higher than a speed of maintenance for the rest of the software application. This speed discrepancy introduces demand for additional management capabilities related to LLM artifacts.

If a software application uses an LLM accessed with a remote Application Programming Interface (API) (e.g., the LLM is hosted by a vendor and provided as a service), the LLM can be changed at any time (in fact, the LLM may even be "learning incrementally" and changing constantly), resulting in a changing behavior with respect to the software application. Different behavior can be considered as: 1) "negative" because the software application can receive unanticipated responses, but also 2) "better" by allowing the LLM to generate new responses to previously unresolved questions. In such cases, a key user of the software application would like to adjust the software application in the most advantageous direction.

Another aspect to consider is that a key user can use a software application in a domain, which has not been initially anticipated by a vendor (e.g., a recruiting application being used in different industries). In this example, a prompt to the LLM specifying how to process a resume of an applicant will typically depend on particular details of the industry. Therefore, a key user may wish to adjust the LLM's specific artifacts (e.g., prompt, configuration, and testing) to their own needs, so that the software application can be used advantageously in the industry.

Additional mechanisms are required to ensure that modified artifacts and new artifact versions provided by the vendor during software application upgrades are managed consistently. Additionally, if key users are managing a software application lifecycle (e.g., defining an upgrade time) in a private cloud deployment, the key users need to be aware of required changes of modified artifacts and require mechanisms to manage the lifecycle of LLM configurations, prompts used to interact with the LLMs within their deployment, and verification tests to ensure a once defined and tested scenario works continuously, even in an environment, where used LLMs change over time.

Various problem descriptions can help to define issues mitigated or solved by the described approach.

First, does an input to a LLM sent by a user match input expected by a software application developer (and does the input impact software application quality)? Developers create functions typically with certain parameters and parameter range(s) in mind. The parameters and parameter range can be covered in testing, which assesses quality of the software application. The parameter range specifies the scope which is tested, "released," and expected to work. However, users may use the software application with slightly or completely different input parameters. Especially in the context of AI enriched software applications, a range of possible inputs can be vast compared to traditionally few input fields of non-AI-enriched software applications. Does the software application also work with the virtually unlimited parameter set? Does the virtually unlimited parameter set impact quality of the software application results? Does the additional parameter range need to be reflected in tests with users?

Second, is there LLM "drift" (i.e., a LLM providing different output for the same input over time), and does the LLM drift impact a software application using genAI? LLMs often output slightly different responses given similar input (apart from some statistical variation), but there can also be a more consistent "drift" if the LLM is changed by the LLM owner (e.g., retrained on new data or based on continuous learning with input). A drift can impact output of the LLM, which is relevant for the software application using the LLM. In this case, a software application processing the LLM output might break at some point and need to be adjusted. This possibility needs to be monitored continuously, and software application integration with the LLM might have to be adjusted in a timely manner to continue working with newer LLM versions.

Third, can a key user (e.g., an administrator) replace a LLM (version) with a different LLM (version) with existing prompts and parameters for a given application and maintain proper functioning of a software application? Vendors of LLMs publish new LLM versions regularly and new types of LLMs are frequently created/released. In some situations, a particular LLM can be provided with a lower cost (e.g., performance, technical requirements, and/or monetary) or an older LLM may be deprecated and a key user wishes to switch to the particular LLM. In any of these cases, the question becomes whether a key user can replace the older LLM / version and still expect consistent responses and application behavior. Key users need regression-type testing tools to monitor quality of such changes and to make necessary adjustments to prevent breaking existing application scenarios.

Fourth, how can a developer (a key user) identify, if the software application works for a particular use case, how best to optimize to adjust to individual use and expectations? The software application is provided with a defined scope and target audience, but may also be useful for a slightly different target audience - if the software application can be adjusted. Developers running a "dev-ops" model can adjust quickly with original code and artifacts at hand. To optimize, a developer requires mechanisms to adjust LLM artifacts (e.g., prompt, configuration, and tests to individualize the software application). The developer also requires access to user feedback, logs, support tickets, and other telemetry-type data. For genAI and its statistical nature, developers need additional information on input, output, and user feedback and usage of the output. A customer developer wants to create test cases and recurringly run them to support test driven development and later monitoring application performance.

Finally, if a developer adjusts artifacts and a new software application version is provided, the developer needs to be able to assist in managing artifacts. This is important to avoid being caught in a modification trap with major follow-up effort.

This disclosure describes an approach to empower key users to increase scope, manage artifacts, and to create or adjust verification tests of a vendor provided software application using LLMs. The approach de-couples a key user's software application lifecycle to a certain extent from a vendor managed lifecycle of the software application. This enables a key user to be quicker in reacting to needs of users and to changes in used LLM services.

Defined is a scope and artifact management and verification test system (SAMVATS): a key user is provided access to adjust LLM related artifacts to adjust scope. The SAMVATS tracks side adjustments to artifacts and supports later management (including merge) of artifacts with vendor-side innovation provided with a newer version of a software application.

The key user has access to a communication log of the software application with the LLM service to analyze user input leading to instructions being sent to the LLMs and responses to support scope analysis, output quality control, and need for changes to LLM-related artifacts of the software application (i.e., the "configuration" - which LLM or LLM version to call, the "prompt" - a template with instructions to the LLM, "input parameters" - reading additional software application data being fed into the prompt, and a "verification test" - runs LLM calls with the prompt and a set of pre-defined input parameters to ensure the LLM response meets requirements). A changed prompt or changed input parameters that are supposed to improve results in a key user specific context will also lead to a different response by an LLM in default test cases. Therefore, a key user can also adjust verification tests. This approach allows also for a "test driven genAI development" process: 1) create a (new) verification test with the desired output for a provided input and then 2) test different LLMs, LLM versions, and prompt adjustments to find, which creates the best output.

Upon a new version being provided by a software application vendor, the approach identifies, for which LLM functions in the software application a new version of artifacts is provided, and which have been adjusted by a key user. For such genAI functions, the approach provides an A/B testing environment: old and the new artifacts can be tested in parallel with new application software, the key user can decide to take the new software application version, keep the older software application version, or to adjust the newly provided software application version similarly as for the earlier application version. This approach implements a regression-type test system for LLM artifacts that show a much larger range of variations than regular software code due to the easy customization possibilities with natural language prompts.

To better realize the fundamentally different approach on integrating with LLMs and to assess customization potentials, one needs to understand the communication flow between software applications and LLMs. An interface to an LLM is, in this case, text in natural language. The software application generates the text, calls the LLM, and processes a response received from the LLM using software application code to create a desired output. With this natural language interface, incremental adjustments are possible, which improve output with a "fine-tuned and tailored" prompt. The described approach supports this type of "fine-tuning and tailoring" and ensures follow-up lifecycle management is supporting the adjusted artifacts. The new natural language interface provides a new degree of freedom, which needs additional management capabilities.

At a high-level, genAI function management is a set of genAI functions in a software application that can be activated and deactivated. When a genAI function is activated: 1) users can call the function using a user interface (UI) of an AI Application (e.g., a graphical user interface (GUI) on a computer display); 2) related verification tests are executed recurringly; and 3) communication to a LLM and a LLM response is logged. When a genAI function is deactivated: 1) users can no longer call the function; 2) related verification tests are stopped; 3) optional: the "verification tests" can be scheduled as a "Capability Checks;" and 4) communication is no longer logged. In some implementations, a genAI function has components, including name and/or ID, prompt text, input parameters, and verification test(s).

A feedback collector collects user feedback. For example, a user star-rating can be used to rate a genAI function and individual responses. Potential information can be provided if a response has been used by a user or has been modified by a user before being used.

A monitoring and statistics are provided to a key user (e.g., from the feedback collector). For example, information can be provided for activated/deactivated genAI functions, usage statistics, verification test run statistics - which tests run and their results, and LLM communication logging information and logging analysis functions for a key user.

Verification test functionality is provided to a key user. A verification test is related to one genAI function in the software application and tests one LLM version on a set of scenarios (input parameters). A key user can adjust the verification test and create an extended test scope by defining additional input parameter sets. The key user is notified when the test status is "error" (i.e., quality falls below a configurable threshold).

A key user can define a "verification test" as an "Capability Check." A capability check does not run on an activated genAI function, where the result is expected to be "OK", and the key user is to be notified, when the test is "error." Instead, a capability check runs on deactivated genAI functions that are still in development / early testing, and which typically result in an "error" and the key user is to be notified, when the check is OK (note, opposite notification criteria compared to a verification test). A capability check is testing the genAI function with different configurations, different LLMs, and different versions for certain capabilities desired by a key user, but not yet provided to users.

GenAI artifact management can relate a prompt, input parameters, configuration, verification tests, and Capability Checks to a "genAI function;" can relate a modified prompt, input parameter, or configuration to an original provided by a vendor; and can relate a verification test or Capability Check to an original or templated test provided by a vendor as well as to a "genAI function" the test covers. Upon runtime, the software application uses the artifact specified by the key user (which can be an original provided by a vendor or a modified version by a key user (such as, a prompt, configuration, etc.)). Upon an upgrade of an application: 1) the system identifies, for which LLM functions in the application, a new version of artifacts is provided, which as well having been adjusted by the key user; 2) the system provides this list of genAI functions to the key user, which are impacted by the update and follow-up activities are potentially required; and 3) The key user can run the before-upgrade verification tests of the impacted genAI functions in an A/B testing mode (a. the verification test is called with the before-upgrade artifacts (such as, prompt, input parameters, LLM configuration and b. the verification test is called with the new (after-upgrade) artifacts provided by the vendor). Additionally, the key user can run Capability Checks to identify new capabilities of the latest delivery.

The following high-level example is provided to aid in understanding, and includes generating a summary of resumes of applicants.

The resume and the specification of the summary can be specific for different industries, the position is offered in, as well as for different professions. A developer will design the instruction and input parameters for a set of positions and industries, and if the application is potentially used by customers in different segments, offer an adjustment possibility for input parameters, prompt, and verification test.

A prompt will specify desired aspects of a resume (like how the applicant matches to the defined skill demand), the education and work experience. This depends on profession and industry.

A prompt may also specify aspects of a resume, which shall be skipped to enable an un-biased selection of applicants in a first round (e.g., gender, age, and religion).

Then, a prompt may specify to include highlight aspects an applicant has mentioned, how the application matches to the job posting (if it is tailored to the posting or a reuse application), assess language and misspellings.

A check would provide a set of resumes as input and test, if the desired aspects are in and the excluded aspects are left out. The check can then provide an assessment regarding the different aspects (e.g., the misspelling aspect was OK, but the exclusion aspects have failed) and an overall assessment.

An administrator or key user of an application user (e.g., a customer) can adjust input parameters (e.g., filter out sections of the resume or related job posting before passing it to the prompt), prompt (e.g., remove the exclusion attributes, of misspelling check, if this is not desired) and verification test to reflect the adjustments and provide focus on certain aspects important to the customer (like: does the resume reflect a desired jargon, used by the customer).

A change in the used LLM can in this case for example impact the attributes to be skipped or fail on assessing if the resume is tailored to the posting or not). In such cases, the key user can then add explicit tests for these desired aspects and iterate with adjusted prompts to improve on the output.

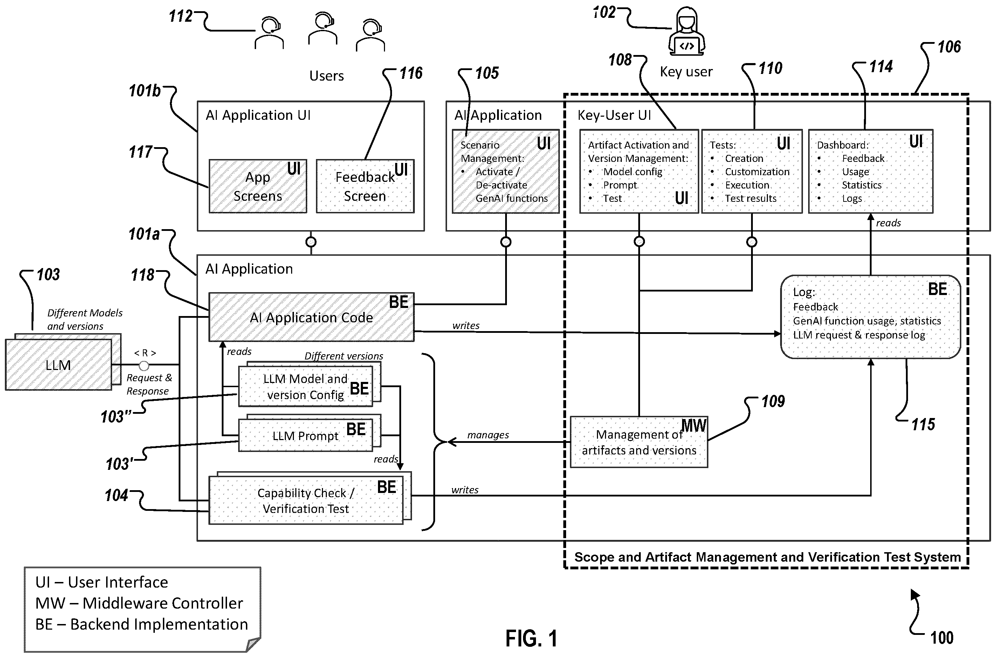

FIG 1 is a system diagram illustrating components of a system for providing genAI application artifact management which enables safeguarding by key users, according to an implementation of the present disclosure.

### Process Descriptions

A software vendor including genAI functions into a software application (an "AI application" or "application") 101a can instrument the application for customer side management:

### Preparation Process

A genAI function can be activated/deactivated by a management operations performed by a key user 102.

Key users 102 can customize LLM 103 artifacts (e.g., prompts (e.g., 103'), input parameters/configuration (e.g., 103")), creating a new version of the LLM 103 artifacts, and also "go back to standard." The key users 102 can use a GUI of a SAMVATS 106, for example, the Artifact Activation and Version Management (AAVM) GUI 108, which can access/leverage functions (e.g., a software module(s)) enabling Management of artifacts and versions 109.

Verification tests can be customized using a Tests GUI 110 of the SAMVATS 106. The Tests GUI 110 provides a verification test template, which key users 102 can adjust and activate to monitor quality of a use case for users 112 (e.g., Customer application users). Users 112 can create their own (new / additional) verification tests and attach them to existing or new use cases. Verification test run results can be made available for key user 102 evaluation. Thresholds can be adjusted to automatically inform a key user 102 if test results are below a defined quality level threshold.

Features for application logs are analyzed and communication from the application to an LLM 103 is recorded by dashboard 114 of the SAMVATS 106. Logs comprise messages being sent to an LLM 103, used artifacts to create instructions (e.g., prompts, input parameters, and configuration), and a received response (e.g., Log/feedback collector 115). The log can also contain potential user feedback (e.g., a "star rating"). Logs can also provide information on usage of a response by the LLM 103 in the application or by a user 112 (i.e., if it is feasible to identify, if the response was used by the user 112, if it was further modified by the user 112 before used, or if it was discarded completely).

Dashboard 114 can also provide statistics on usage of a genAI function. A key user 102 can obtain feedback about usage statistics of a genAI function, if it is activated/deactivated, and how many calls are sent.

A key user 102 activates a new genAI function in an application using the AAVM 108. The key user 102 identifies verification tests (e.g., 104) related to a function using the Tests GUI 110. The identified verification tests are executed with default input provided by a vendor. The key user 102 adjusts input and an expected response to the verification test according to their own used scope and potentially creates more verification tests to cover required scope. If the verification tests provide positive results: 1) the key user 102 activates the genAI function for other users (e.g., users 112) and 2) verification tests are activated for running continuously. If the verification tests return error messages or negative results, the key user 102 can run an "adjust LLM artifacts" process(es). The new genAI function is used, logs are written, and user feedback is collected.

### Verification Test Process

Start situations can include: 1) a new function is activated (e.g., using Scenario Management 105 of the AI Application 101a) and needs to be tested (e.g., using the Tests GUI 110) recurringly; 2) the application usage is extended - the range of input parameters to the genAI function is extended; 3) user behavior changes - different genAI functions are used more frequently; 4) a verification test reports a problem; and 5) the LLM is replaced with a different LLM or a version of the LLM is changed.

With respect to creation/adjustment of verification tests (e.g., using the Tests GUI 110):

For 1) - If a function is newly activated (i.e., no user data exists): 1) a key user 102 checks if there is a verification test provided by a vendor which can be activated and activates the verification test; 2) Alternatively, the key user 102 looks to determine if there is a verification test template which can be adjusted to a desired case and creates a verification test from the template and adjusts input parameters and expected responses; 3) or a customer individual verification test is created by a key user 102, which creates a verification test, specifying related application function, used prompt, input parameters and expected responses.

For 2) and 3) - If there is already user data: 1) the key user 102 reviews the verification test results (e.g., log history); 2) the key user 102 evaluates input parameters and prompt being sent to the LLM 103 using the log; 3) statistical distribution is evaluated to find the most relevant parameters (e.g., using logs of calls to the LLM 103 and response by the LLM 103); 4) which parameters are already covered by tests are identified; and 5) the key user 102 adjusts a verification test and potentially creates additional tests covering a range of input parameters (which includes specifying desired input parameters and responses and configuring the verification test to take a prompt defined for the application genAI function).

For 4) (Review) - The key user 102 reviews verification test results: 1) the key user 102 analyses the test results and identifies a problem; 2) the key user 102 can change prompt or input parameters for the call to the LLM 103, creating a custom variant for this use case; 3) the key user 102 runs the tests with the changed setup and iterates on changes if the problem persists (i.e., "test-driven-development"); 4) if the problem can be mitigated with a change to the prompt or input parameters, the key user 102 can activate the change of the prompt or input parameters for users 112. If the problem cannot be mitigated with a change to the prompt or input parameters, the key user 102 can disable functionality and wait for an update by the vendor and the key user 102 can additionally report the problem to the vendor.

For 5) - as previously mentioned, with new versions of LLMs, the earlier LLM versions are typically outperformed and software application developers wish to switch to the newer versions. Developers many also wish to replace an existing LLM with a newer/different LLM with newer/additional features.

The key user 102 runs the verification test and evaluates test results: 1) If the test passes, the verification test is activated for continuous verification; and if the test does not pass, the verification test is adjusted until is passes or the verification test is deleted.

### Adjust LLM Artifacts (Test-Driven Development)

The key user 102 creates/copies and adjusts a verification test 104 (e.g., using the Tests GUI 110) - and in this scenario used as a "capability check." A response of the LLM 103 is passed together with input parameters to the verification test. The verification test outputs a result, such as "passed," "problem," or more detailed feedback on response quality.

With a given verification test and LLM 103 version to be called, the key user 102 can adjust prompt and input parameters (i.e., improve the prompt). A determination can be made when the verification test assesses the response by the LLM 103 as more relevant.

In testing (e.g., using the Tests GUI 110) different LLMs 103 or LLM 103 versions: 1) different LLMs 103 and LLM 103 versions can be tested, and responses can be assessed using the verification tests; 2) responses by different LLM 103 (versions) can be compared; 3) prompts can be adjusted for different LLMs 103 to reflect specific needs; and 4) the approach can also be used to scan newly published LLM 103 versions (as release frequency of new LLMs 103 is typically rather high) with lower effort for the key user 102.

### User Complaints

Users 112 complain (e.g., using a Feedback Screen 116 and/or Application (App) Screens 117 of an AI Application UI 101b) that responses created by an LLM 103 are not matching needs. The system receives complaints (e.g., at the dashboard 114) by the user 112 related to a used function in the application. The system maps the used function to a related verification test, where the verification test assesses the response for the function. The key user 102 is notified about the genAI function where users 112 have sent complaints. The key user calls the system to visualize historic verification test results (e.g., using Tests GUI 110). If the test results are reporting "OK" (even while the users are not satisfied): 1) there is a first need to "Adjust the verification test," as test and user feedback deviate (the key user 102 would adjust the verification test and as a consequence, the verification test should report a problem and the process can continue normally) or 2) if the test results are reporting "Problem" (i.e., either new or doing this for some time), the key user 102 would follow the described steps (Review) in the "Verification Test Process."

### Application Update (by a Vendor or an Administrator)

Implications of an application update, including genAI functions and their definitions, include: 1) new genAI functions, which the key user 102 can activate (e.g., using the Scenario Management 105); updates to artifacts and code (e.g. AI Application Code 118), where the prompt and the input parameters can change; 3) the LLM 103 (e.g., version) which is called by the application can change; and 4) the verification test definitions can change.

With deployment of a new application version, new code is active and new genAI related artifacts are available. Processes are affected by this fact. In some cases, used genAI functions are updated. The system can identify, for which LLM 103 functions in the application, a new version of artifacts is provided, including which have been adjusted (e.g., using the AAVM 108) by the key user 102 (i.e., a conflict has been detected). The system can provide, to the key user 102, the list of genAI functions which are impacted by the update and where follow-up activities are potentially required. The key user can run before-upgrade verification tests (e.g., using the Tests GUI 110) of the impacted genAI functions in an A/B testing mode: 1) the verification test is called with before-upgrade artifacts (e.g., prompt, input parameters, a LLM 103 configuration) and 2) the verification test is called with the new (after-upgrade) artifacts provided by a vendor. If the verification test template has been updated by the vendor, the key user 102 can iterate and define new target verification tests and then continue A/B testing.

The key user 102 can decide to: 1) take the new vendor version; 2) keep the own version; or 3) adjust the newly provided version similarly (e.g., adjustment can be supported by a three-way merge tool (e.g., showing changes by the vendor as well as by the customer from a common ancestor version and allowing to merged changes from both sources into a common new version with editing options for the key user to further adjust)).

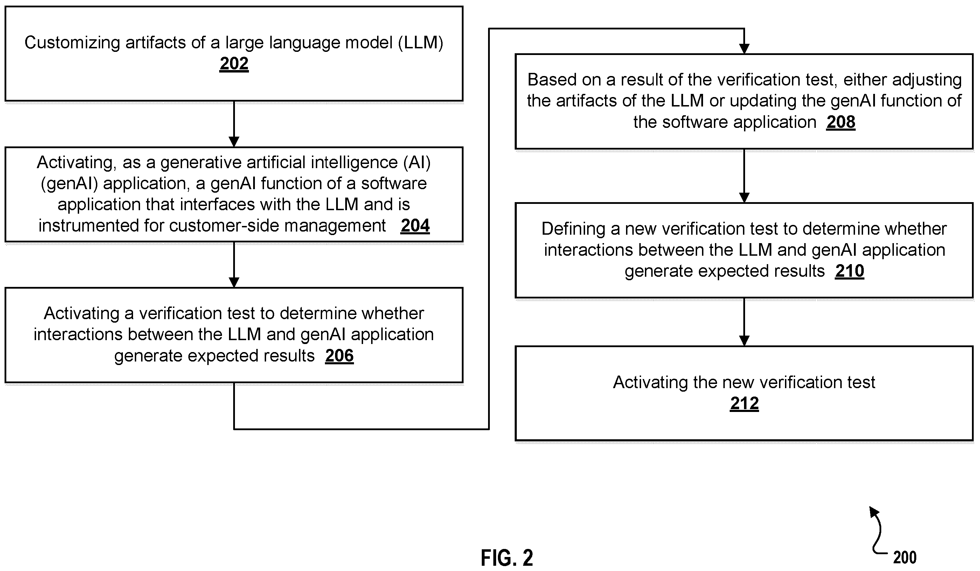

FIG. 2 is a flowchart illustrating an example of a computer-implemented method 200 for providing generative artificial intelligence (AI) application artifact management which enables safeguarding by key users, according to an implementation of the present disclosure. For clarity of presentation, the description that follows generally describes method 200 in the context of the other figures in this description. However, it will be understood that method 200 can be performed, for example, by any system, environment, software, and hardware, or a combination of systems, environments, software, and hardware, as appropriate. In some implementations, various steps of method 200 can be run in parallel, in combination, in loops, or in any order.

At 202, artifacts of a large language model (LLM) are customized. In some implementations, the artifacts of a LLM include a prompt, input parameters, and configuration. From 202, method 200 proceeds to 204.

At 204, a generative artificial intelligence (AI) (genAI) function of a software application that interfaces with the LLM and is instrumented for customer-side management is activated, as a genAI application. From 204, method 200 proceeds to 206.

At 206, a verification test is activated to determine whether interactions between the LLM and genAI application generate expected results. In some implementations, verification test start situations include: 1) a new genAI function is activated and needs to be tested; 2) usage of the software application is extended; 3) user behavior changes; 4) a verification test reports a problem; and 5) the LLM is replaced with a different LLM or a version of the LLM is changed. From 206, method 200 proceeds to 208.

At 208, based on a result of the verification test, either adjusting the artifacts of the LLM or updating the genAI function of the software application. In some implementations, adjusting the artifacts of the LLM is performed by a key user. In some implementations, the result of the verification test is determined by analyzing a communication log of communications between the genAI application and the LLM. In some implementations, a list of genAI functions which are impacted by either adjusting the artifacts of the LLM or updating the genAI function of the software application is provided to a key user. From 208, method 200 proceeds to 210.

At 210, a new verification test is defined to determine whether interactions between the LLM and genAI application generate expected results. In some implementations, a new verification test is defined to determine whether interactions between the LLM and genAI application generate expected results is based, at least partially, on collected user feedback. From 210, method 200 proceeds to 212.

At 212, the new verification test is activated. After 212, method 200 can stop.

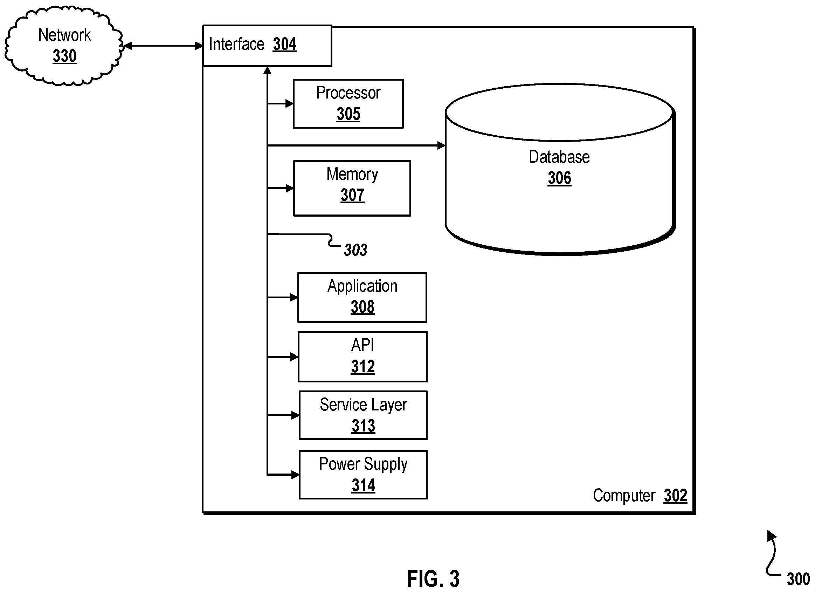

FIG. 3 is a block diagram illustrating an example of a computer-implemented System 300 used to provide computational functionalities associated with described algorithms, methods, functions, processes, flows, and procedures, according to an implementation of the present disclosure. In the illustrated implementation, computer-implemented system 300 includes a Computer 302 and a Network 330.

The illustrated Computer 302 is intended to encompass any computing device, such as a server, desktop computer, laptop/notebook computer, wireless data port, smart phone, personal data assistant (PDA), tablet computer, one or more processors within these devices, or a combination of computing devices, including physical or virtual instances of the computing device, or a combination of physical or virtual instances of the computing device. Additionally, the Computer 302 can include an input device, such as a keypad, keyboard, or touch screen, or a combination of input devices that can accept user information, and an output device that conveys information associated with the operation of the Computer 302, including digital data, visual, audio, another type of information, or a combination of types of information, on a graphical-type user interface (UI) (or GUI) or other UI.

The Computer 302 can serve in a role in a distributed computing system as, for example, a client, network component, a server, or a database or another persistency, or a combination of roles for performing the subject matter described in the present disclosure. The illustrated Computer 302 is communicably coupled with a Network 330. In some implementations, one or more components of the Computer 302 can be configured to operate within an environment, or a combination of environments, including cloud-computing, local, or global.

At a high level, the Computer 302 is an electronic computing device operable to receive, transmit, process, store, or manage data and information associated with the described subject matter. According to some implementations, the Computer 302 can also include or be communicably coupled with a server, such as an application server, e-mail server, web server, caching server, or streaming data server, or a combination of servers.

The Computer 302 can receive requests over Network 330 (for example, from a client software application executing on another Computer 302) and respond to the received requests by processing the received requests using a software application or a combination of software applications. In addition, requests can also be sent to the Computer 302 from internal users (for example, from a command console or by another internal access method), external or third-parties, or other entities, individuals, systems, or computers.

Each of the components of the Computer 302 can communicate using a System Bus 303. In some implementations, any or all of the components of the Computer 302, including hardware, software, or a combination of hardware and software, can interface over the System Bus 303 using an application programming interface (API) 312, a Service Layer 313, or a combination of the API 312 and Service Layer 313. The API 312 can include specifications for routines, data structures, and object classes. The API 312 can be either computer-language independent or dependent and refer to a complete interface, a single function, or even a set of APIs. The Service Layer 313 provides software services to the Computer 302 or other components (whether illustrated or not) that are communicably coupled to the Computer 302. The functionality of the Computer 302 can be accessible for all service consumers using the Service Layer 313. Software services, such as those provided by the Service Layer 313, provide reusable, defined functionalities through a defined interface. For example, the interface can be software written in a computing language (for example JAVA or C++) or a combination of computing languages, and providing data in a particular format (for example, extensible markup language (XML)) or a combination of formats. While illustrated as an integrated component of the Computer 302, alternative implementations can illustrate the API 312 or the Service Layer 313 as stand-alone components in relation to other components of the Computer 302 or other components (whether illustrated or not) that are communicably coupled to the Computer 302. Moreover, any or all parts of the API 312 or the Service Layer 313 can be implemented as a child or a sub-module of another software module, enterprise application, or hardware module without departing from the scope of the present disclosure.

The Computer 302 includes an Interface 304. Although illustrated as a single Interface 304, two or more Interfaces 304 can be used according to particular needs, desires, or particular implementations of the Computer 302. The Interface 304 is used by the Computer 302 for communicating with another computing system (whether illustrated or not) that is communicatively linked to the Network 330 in a distributed environment. Generally, the Interface 304 is operable to communicate with the Network 330 and includes logic encoded in software, hardware, or a combination of software and hardware. More specifically, the Interface 304 can include software supporting one or more communication protocols associated with communications such that the Network 330 or hardware of Interface 304 is operable to communicate physical signals within and outside of the illustrated Computer 302.

The Computer 302 includes a Processor 305. Although illustrated as a single Processor 305, two or more Processors 305 can be used according to particular needs, desires, or particular implementations of the Computer 302. Generally, the Processor 305 executes instructions and manipulates data to perform the operations of the Computer 302 and any algorithms, methods, functions, processes, flows, and procedures as described in the present disclosure.

The Computer 302 also includes a Database 306 that can hold data for the Computer 302, another component communicatively linked to the Network 330 (whether illustrated or not), or a combination of the Computer 302 and another component. For example, Database 306 can be an in-memory or conventional database storing data consistent with the present disclosure. In some implementations, Database 306 can be a combination of two or more different database types (for example, a hybrid in-memory and conventional database) according to particular needs, desires, or particular implementations of the Computer 302 and the described functionality. Although illustrated as a single Database 306, two or more databases of similar or differing types can be used according to particular needs, desires, or particular implementations of the Computer 302 and the described functionality. While Database 306 is illustrated as an integral component of the Computer 302, in alternative implementations, Database 306 can be external to the Computer 302. The Database 306 can hold and operate on at least any data type mentioned or any data type consistent with this disclosure.

The Computer 302 also includes a Memory 307 that can hold data for the Computer 302, another component or components communicatively linked to the Network 330 (whether illustrated or not), or a combination of the Computer 302 and another component. Memory 307 can store any data consistent with the present disclosure. In some implementations, Memory 307 can be a combination of two or more different types of memory (for example, a combination of semiconductor and magnetic storage) according to particular needs, desires, or particular implementations of the Computer 302 and the described functionality. Although illustrated as a single Memory 307, two or more Memories 307 or similar or differing types can be used according to particular needs, desires, or particular implementations of the Computer 302 and the described functionality. While Memory 307 is illustrated as an integral component of the Computer 302, in alternative implementations, Memory 307 can be external to the Computer 302.

The Application 308 is an algorithmic software engine providing functionality according to particular needs, desires, or particular implementations of the Computer 302, particularly with respect to functionality described in the present disclosure. For example, Application 308 can serve as one or more components, modules, or applications. Further, although illustrated as a single Application 308, the Application 308 can be implemented as multiple Applications 308 on the Computer 302. In addition, although illustrated as integral to the Computer 302, in alternative implementations, the Application 308 can be external to the Computer 302.

The Computer 302 can also include a Power Supply 314. The Power Supply 314 can include a rechargeable or non-rechargeable battery that can be configured to be either user- or non-user-replaceable. In some implementations, the Power Supply 314 can include power-conversion or management circuits (including recharging, standby, or another power management functionality). In some implementations, the Power Supply 314 can include a power plug to allow the Computer 302 to be plugged into a wall socket or another power source to, for example, power the Computer 302 or recharge a rechargeable battery.

There can be any number of Computers 302 associated with, or external to, a computer system containing Computer 302, each Computer 302 communicating over Network 330. Further, the term "client," "user," or other appropriate terminology can be used interchangeably, as appropriate, without departing from the scope of the present disclosure. Moreover, the present disclosure contemplates that many users can use one Computer 302, or that one user can use multiple computers 302.

Described implementations of the subject matter can include one or more features, alone or in combination.

For example, in a first implementation, a computer-implemented method, comprising: customizing artifacts of a large language model (LLM); activating, as a generative artificial intelligence (AI) (genAI) application, a genAI function of a software application that interfaces with the LLM and is instrumented for customer-side management; activating a verification test to determine whether interactions between the LLM and genAI application generate expected results; based on a result of the verification test, either adjusting the artifacts of the LLM or updating the genAI function of the software application; defining a new verification test to determine whether interactions between the LLM and genAI application generate expected results; and activating the new verification test.

The foregoing and other described implementations can each, optionally, include one or more of the following features:

A first feature, combinable with any of the following features, wherein the artifacts of a LLM include a prompt, input parameters, and configuration.

A second feature, combinable with any of the previous or following features, wherein verification test start situations include: 1) a new genAI function is activated and needs to be tested; 2) usage of the software application is extended; 3) user behavior changes; 4) a verification test reports a problem; and 5) the LLM is replaced with a different LLM or a version of the LLM is changed.

A third feature, combinable with any of the previous or following features, comprising analyzing a communication log of communications between the genAI application and the LLM.

A fourth feature, combinable with any of the previous or following features, wherein adjusting the artifacts of the LLM is performed by a key user.

A fifth feature, combinable with any of the previous or following features, wherein defining a new verification test to determine whether interactions between the LLM and genAI application generate expected results is based, at least partially, on collected user feedback.

A sixth feature, combinable with any of the previous or following features, comprising, providing to a key user, a list of genAI functions which are impacted by either adjusting the artifacts of the LLM or updating the genAI function of the software application.

In a second implementation, a non-transitory, computer-readable medium storing one or more instructions executable by a computer system to perform one or more operations, comprising: customizing artifacts of a large language model (LLM); activating, as a generative artificial intelligence (AI) (genAI) application, a genAI function of a software application that interfaces with the LLM and is instrumented for customer-side management; activating a verification test to determine whether interactions between the LLM and genAI application generate expected results; based on a result of the verification test, either adjusting the artifacts of the LLM or updating the genAI function of the software application; defining a new verification test to determine whether interactions between the LLM and genAI application generate expected results; and activating the new verification test.

The foregoing and other described implementations can each, optionally, include one or more of the following features:

A first feature, combinable with any of the following features, wherein the artifacts of a LLM include a prompt, input parameters, and configuration.

A second feature, combinable with any of the previous or following features, wherein verification test start situations include: 1) a new genAI function is activated and needs to be tested; 2) usage of the software application is extended; 3) user behavior changes; 4) a verification test reports a problem; and 5) the LLM is replaced with a different LLM or a version of the LLM is changed.

A third feature, combinable with any of the previous or following features, comprising analyzing a communication log of communications between the genAI application and the LLM.

A fourth feature, combinable with any of the previous or following features, wherein adjusting the artifacts of the LLM is performed by a key user.

A fifth feature, combinable with any of the previous or following features, wherein defining a new verification test to determine whether interactions between the LLM and genAI application generate expected results is based, at least partially, on collected user feedback.

A sixth feature, combinable with any of the previous or following features, comprising, providing to a key user, a list of genAI functions which are impacted by either adjusting the artifacts of the LLM or updating the genAI function of the software application.

In a third implementation, a computer-implemented system, comprising: one or more computers; and one or more computer memory devices interoperably coupled with the one or more computers and having tangible, non-transitory, machine-readable media storing one or more instructions that, when executed by the one or more computers, perform one or more operations, comprising: customizing artifacts of a large language model (LLM); activating, as a generative artificial intelligence (AI) (genAI) application, a genAI function of a software application that interfaces with the LLM and is instrumented for customer-side management; activating a verification test to determine whether interactions between the LLM and genAI application generate expected results; based on a result of the verification test, either adjusting the artifacts of the LLM or updating the genAI function of the software application; defining a new verification test to determine whether interactions between the LLM and genAI application generate expected results; and activating the new verification test.

The foregoing and other described implementations can each, optionally, include one or more of the following features:
A first feature, combinable with any of the following features, wherein the artifacts of a LLM include a prompt, input parameters, and configuration.
A second feature, combinable with any of the previous or following features, wherein verification test start situations include: 1) a new genAI function is activated and needs to be tested; 2) usage of the software application is extended; 3) user behavior changes; 4) a verification test reports a problem; and 5) the LLM is replaced with a different LLM or a version of the LLM is changed.
A third feature, combinable with any of the previous or following features, comprising analyzing a communication log of communications between the genAI application and the LLM.
A fourth feature, combinable with any of the previous or following features, wherein adjusting the artifacts of the LLM is performed by a key user.
A fifth feature, combinable with any of the previous or following features, wherein defining a new verification test to determine whether interactions between the LLM and genAI application generate expected results is based, at least partially, on collected user feedback.
A sixth feature, combinable with any of the previous or following features, comprising, providing to a key user, a list of genAI functions which are impacted by either adjusting the artifacts of the LLM or updating the genAI function of the software application.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application-specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand-alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special-purpose logic circuitry, for example, a CPU, an FPGA, or an ASIC.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer-readable media for storing computer program instructions and data can include all forms of permanent/non-permanent or volatile/non-volatile memory, media and memory devices, including by way of example semiconductor memory devices, for example, random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto-optical disks; and optical memory devices, for example, digital versatile/video disc (DVD), compact disc (CD)-ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back-end, middleware, or front-end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. A computer-implemented method, comprising:
customizing artifacts of a large language model (LLM);
activating, as a generative artificial intelligence (AI) (genAI) application, a genAI function of a software application that interfaces with the LLM and is instrumented for customer-side management;
activating a verification test to determine whether interactions between the LLM and genAI application generate expected results;
based on a result of the verification test, either adjusting the artifacts of the LLM or updating the genAI function of the software application;
defining a new verification test to determine whether interactions between the LLM and genAI application generate expected results; and
activating the new verification test.

2. The computer-implemented method of claim 1, wherein the artifacts of the LLM include a prompt, input parameters, and configuration.

3. The computer-implemented method of claim 1 or 2, wherein verification test start situations include: 1) a new genAI function is activated and needs to be tested; 2) usage of the software application is extended; 3) user behavior changes; 4) a verification test reports a problem; and 5) the LLM is replaced with a different LLM or a version of the LLM is changed.

4. The computer-implemented method of any one of the preceding claims, wherein adjusting the artifacts of the LLM is performed by a key user.

5. The computer-implemented method of any one of the preceding claims, comprising analyzing a communication log of communications between the genAI application and the LLM.

6. The computer-implemented method of any one of the preceding claims, wherein defining a new verification test to determine whether interactions between the LLM and genAI application generate expected results is based, at least partially, on collected user feedback.

7. The computer-implemented method of any one of the preceding claims, comprising, providing to a key user, a list of genAI functions which are impacted by either adjusting the artifacts of the LLM or updating the genAI function of the software application.

8. An, optionally non-transitory, computer-readable medium storing one or more instructions executable by a computer system to perform one or more operations according to any one of the preceding claims.

9. A computer-implemented system, comprising:
one or more computers; and
one or more computer memory devices interoperably coupled with the one or more computers and having tangible, non-transitory, machine-readable media storing one or more instructions that, when executed by the one or more computers, perform one or more operations, comprising:
customizing artifacts of a large language model (LLM);
activating, as a generative artificial intelligence (AI) (genAI) application, a genAI function of a software application that interfaces with the LLM and is instrumented for customer-side management;
activating a verification test to determine whether interactions between the LLM and genAI application generate expected results;
based on a result of the verification test, either adjusting the artifacts of the LLM or updating the genAI function of the software application;
defining a new verification test to determine whether interactions between the LLM and genAI application generate expected results; and
activating the new verification test.

10. The computer-implemented system of claim 9, wherein the artifacts of a LLM include a prompt, input parameters, and configuration.

11. The computer-implemented system of claim 9 or 10, wherein verification test start situations include: 1) a new genAI function is activated and needs to be tested; 2) usage of the software application is extended; 3) user behavior changes; 4) a verification test reports a problem; and 5) the LLM is replaced with a different LLM or a version of the LLM is changed.

12. The computer-implemented system of any one of claims 9 to 11, wherein adjusting the artifacts of the LLM is performed by a key user.

13. The computer-implemented system of any one of claims 9 to 12, comprising analyzing a communication log of communications between the genAI application and the LLM.

14. The computer-implemented system of any one of claims 9 to 13, wherein defining a new verification test to determine whether interactions between the LLM and genAI application generate expected results is based, at least partially, on collected user feedback.
